# EUROPEAN PATENT SPECIFICATION

(11) **EP 3 053 674 B1**
(45) Date of publication and mention of the grant of the patent: **01.04.2020**
(21) Application number: 15153538.2
(22) Date of filing: 03.02.2015
(51) Int. Cl.: B22F 3/105, B29C 67/00, B22F 5/00, B33Y 80/00, B33Y 10/00, B29C 64/153, F23M 5/02, F23R 3/00

(54) **METHOD FOR MANUFACTURING A COMBUSTOR FRONT PANEL AND A COMBUSTOR FRONT PANEL**
VERFAHREN ZUR HERSTELLUNG EINER BRENNKAMMERFRONTPLATTE UND BRENNKAMMERFRONTPLATTE
PROCÉDÉ DE FABRICATION D'UN PANNEAU AVANT DE CHAMBRE DE COMBUSTION ET PANNEAU AVANT DE CHAMBRE DE COMBUSTION

(43) Date of publication of application: 10.08.2016
(73) Proprietor: Ansaldo Energia IP UK Limited, London W1G 9DQ (GB)
(72) Inventor: Loeffel, Kaspar, 8049 Zürich (CH); Maurer, Michael Thomas, 79713 Bad Säckingen (DE); Palys, Dariusz, 5412 Gebenstorf (CH)
(74) Representative: Bernotti, Andrea

(56) References cited:
- EP-A1- 2 685 170
- US-A1- 2014 169 981
- US-A1- 2014 241 871

## Description

### TECHNICAL FIELD OF INVENTION

The present disclosure relates to a method for manufacturing combustor front panel by an additive manufacturing process. It further relates to combustor front panel producible by said method. The additive manufacturing process comprises consecutively adding material to combustor front panel along a buildup direction starting from a base side of the combustor front panel in producing a base side transverse to the buildup direction and adding material starting at the base side in consecutive steps, advancing in the buildup direction from one step to a subsequent step. The additive manufacturing process may in particular be a selective laser melting process or a selective electron beam melting process.

### BACKGROUND OF INVENTION

Additive manufacturing processes become increasingly used in industry. These processes, in which material is added to an element in manufacturing the element rather than removing material from a blank allow for instance the generation of cavities or undercuts which might not or only with significant difficulties be manufactured by a cutting process. Also, restrictions applying to casting processes, as for example the need to avoid abrupt changes of cross-sections, do not apply to additive manufacturing processes.

Additive manufacturing processes for manufacturing metallic parts include for instance selective laser melting or selective electron beam melting processes. In these processes, layers of metallic powder are disposed. A laser beam or electron beam is directed onto the bed of metallic powder, locally melting the powder, and the beam is subsequently advanced on the powder surface. Molten metallic substance solidifies, while the metallic powder at a neighboring location is molten. Thus, a layer of solidified metal is generated along the beam trajectory. After a processing cycle in a layer of material is finished, a new layer of metal powder is disposed on top, and a new cycle of melting and subsequently solidifying the metal is carried out. In choosing the layer thickness and the beam power appropriately, each layer of solidified material is bonded to the preceding layer. Thus, a metallic component is build along a buildup direction of the manufacturing process. The thickness of one layer of material is typically in a range from 10 to 100 micrometers. The process advance or buildup direction from one layer to a subsequent layer typically is from bottom to top in a geodetic sense.

However, certain restrictions also apply to these methods. If, for instance, an overhang structure is to be manufactured in one layer, the overhang structure, if no support for the new layer of solidified material is provided, will bend. As a result, a weak product quality may be found, or the manufacturing process might be canceled. While a remedy for this situation might be to manufacture support structures below overhang structures, and subsequently removing the support structures, it is obvious that an additional manufacturing step involving a removal process, in particular a cutting or chip removing process, will be required, requiring an additional process step, thus adding manufacturing time, and cost. Moreover, for certain geometries manufactured, it might not be possible or very difficult to access and remove the support structures.

US 2014/0241871 A1 teaches to apply additive manufacturing processes for manufacturing a vane structure. The vane structure is built layer by layer and overhangs and reclining ledges are formed. In EP 2 685 170 A1 and US 2014/0169981 A1, additive manufacturing processes are used in manufacturing of cooling elements of cooled walls and turbine blades.

### SUMMARY OF THE DISCLOSURE

It is an object of the present disclosure to provide a method for manufacturing a combustor front panel by an additive manufacturing process. It is a further object of the present disclosure to provide a method for manufacturing a combustor front panel by an additive manufacturing process overcoming drawbacks of the art. It is a particular object of the present disclosure to overcome the drawbacks of the art cited above. It is a further object of the present disclosure to provide a method for manufacturing a combustor front panel by an additive manufacturing process allowing the manufacturing of overhang structures without the need to provide specific support structures which need subsequently to be removed.

It is a further object of the present disclosure to provide a combustor front panel producible by the disclosed method, which comprises overhang structures which do not require specific support structures during the buildup of the structures by an additive manufacturing method.

These objects, and other objects, are achieved by the method as recited in claim 1 and by a combustor front panel as recited claim 9.

A method for manufacturing a combustor front panel by an additive manufacturing process is disclosed, wherein the additive manufacturing process comprises consecutively adding material to combustor front panel along a buildup direction starting from a base side. The base side is manufactured transverse to the buildup direction and material is added in consecutive steps starting at the base side, The method comprises manufacturing the combustor front panel such as to comprise a front face extending from the base side and into the buildup direction. Further, at least one bump structure is manufactured on said front face by means of the additive manufacturing process. The bump structure is delimited by a delimitation, wherein a delimitation of said bump structure comprises at least one reclining ledge and at least one overhang ledge, The bump structure may be a concave or a convex bump structure. A bump structure may in certain embodiments be a depression on the front face, that is, a concave bump structure, not penetrating the element, and comprising a back wall. It might likewise be a convex bump structure, that is, an elevation on the face. Convex bump structures as well as concave bump structures might be provided on the front face. The method as disclosed herein comprises manufacturing all overhang ledges of a bump structure, and all overhang structures of all bump structures, to form an angle with the buildup direction being smaller than or equal to 50 degrees.

It is understood that, if the buildup direction is from bottom to top in a geodetic sense, in other words, vertical, also an angle of the overhang ledges with a horizontal may be defined. Said angle with the horizontal is larger than or equal to 40 degrees.

It is further understood that the base side needs not to be manufactured in one layer. If the base side is for instance arched, lateral segments of the base side may be manufactured first and the base side may be finished in subsequent buildup steps. Generally, the base side is the lower side of the combustor front panel if for instance the buildup direction is vertical from bottom to top.

Due to the inclination of the overhang ledges, the overhang ledges are self-supporting during the manufacturing process. An additional incremental bearing-out generated while adding a new layer of material will be small enough as to support itself against gravity. The incremental bearing-out or cantilevering distance will be the smaller the smaller the angle between the buildup direction, or the vertical direction, respectively, is during the manufacturing process, or, the larger the angle between the overhang ledge and the horizontal is. It has been shown that good results are generally obtained if an angle between the buildup direction and the overhang ledge is smaller than 50 degrees. The smaller the angle is, the more support will be provided for an incrementally generated overhang. Good results have been found if the angle between an overhang ledge and the horizontal is larger than or equal to 40 degrees. The larger the angle is the more support is provided for an incrementally generated overhang.

A concave bump structure will generally be delimited in the buildup direction by an overhang ledge, while it will be delimited towards the base side by a reclining ledge. A convex bump structure will generally be limited in the buildup direction by a reclining ledge and will be delimited towards the base side by an overhang ledge. More specifically spoken, if the buildup direction is bottom to top, and the base side constitutes a lower side of the element during the manufacturing process, an overhang ledge will be disposed on the upper side of a concave bump structure and on a lower side of a convex bump structure. Likewise, a reclining ledge will be disposed on the lower side of a concave bump structure and on an upper side of a convex bump structure.

The method may comprise manufacturing a multitude of bump structures on the front face, and it comprises manufacturing concave bump structures. The method may comprise manufacturing convex bump structures on the front face as well. In particular, the conditions lined out above and in claim 1 for the overhang ledges will apply to all bump structures manufactured on the front face.

According to the invention the method comprises manufacturing at least one concave bump structure as a non-penetrating structure. That is to say that the concave bump structure which is manufactured by the additive process does not penetrate the element from the front face to an opposite second face, but is a depression as noted above. In a more specific aspect all concave bump structures may be manufactured as non-penetrating bump structures. Manufacturing non-penetrating bump structures comprises manufacturing a back wall of the concave bump structure. In this respect the bump structures shall be clearly distinguished from dedicated through openings which might be manufactured in different ways, one of which will be lined out below.

In one mode of carrying out the method according to the present disclosure, it comprises manufacturing at least one bump structure such that a delimitation of said bump structure comprises two adjacent overhang ledges, said overhang ledges including an angle and forming an apex, said apex being arranged at a buildup end of a concave bump structure or on a base end of a convex bump structure. That means, that a tip formed at the abutment location of two overhang ledges points towards the base side of the combustor front panel in the case of convex bump structure and points towards the buildup direction in the case of a concave bump structure. In case the buildup is performed from bottom to top, i.e. along a vertical direction, the apex formed by two overhang ledges is arranged at the top of a concave bump structure or on the bottom of a convex bump structure.

In still another aspect of the present disclosure, the method comprises manufacturing at least one bump structure such that a delimitation of the bump structure comprises an overhang ledge and a lateral ledge, said overhang ledge and said lateral ledge including an angle and forming an apex, said apex being arranged at a buildup end of a concave bump structure or on a base end of a convex bump structure, the included angle in particular being smaller than or equal to 50 degrees. A lateral ledge in this context is a ledge extending at least essentially along the buildup direction, that is, in certain embodiments, along a vertical direction.

The method may further comprise manufacturing at least one through opening extending from a first front face to a second front face by the additive manufacturing process. The first and second front faces may in particular be arranged on opposed faces of the combustor front panel. Manufacturing said through opening may comprise manufacturing a support structure in the through opening and may in particular comprise removing the support structure after the additive manufacturing process has finished by a removing manufacturing process. In providing the support structure, it is possible to manufacture a through opening which is delimited on one side by an overhang ledge extending perpendicular or at least essentially perpendicular to the buildup direction. In particular it is possible to manufacture a through opening which is delimited on one side by a horizontal or approximately horizontal overhang ledge. However, removing the support structure requires a good tooling access to the support structure. While this may be easily done for through openings and in particular for through openings exceeding a certain size, such access may in practice be largely restricted for non-penetrating bump structures, in particular if said bump structures have sizes of some millimeters only. Moreover, in certain embodiments of a combustor front panel only one or a few through openings may be manufactured, while a manifold of bump structures being sized in a millimeter region may need to be manufactured. It will be appreciated, that the additional removing process may be easily applied for a relatively small number of through openings, but may be very expensive to apply to a large number of bump structures.

As repeatedly mentioned before, the buildup direction in a method according to the present disclosure may be vertical, bottom to top. Bottom to top in this respect means bottom to top in a geodetic sense.

In one aspect, manufacturing the bump structures may be restricted to an additive manufacturing process. In other words, manufacturing the bump structures does not involve a removing or cutting process and in particular does not include a chip removing manufacturing process. It does not mean, that manufacturing the bump structures does not involve any subsequent finishing process, like cleaning, blasting, and so forth.

The additive manufacturing process may be one of a selective laser melting process and a selective electron beam melting process.

A combustor front panel received by a method as lined out above comprises a first side, a second side arranged opposite the first side, and one front face connecting the first and the second sides. At least one, and in particular a multitude of, bump structures is arranged on the front face. One of the first and second sides is a base side which was manufactured first, and additional material was added by an additive manufacturing process starting from the base side to the other one of the first and second sides. The front face comprises at least one, and in particular a multitude of, bump structures. Each bump structure is delimited by a delimitation. Said delimitation, when the combustor front panel is put down on a horizontal surface with the base side at the bottom, comprises at least one overhang ledge. Said overhang ledge is not horizontal, but tilted against a horizontal direction at a certain angle. In case the element was manufactured with support points of the base side leveled during manufacturing, the overhang ledge is tilted against the horizontal at the same angle as during manufacturing. If the support points were not leveled during manufacturing, then, of course, the overhead ledges will be tilted accordingly at a larger or smaller angle. More specifically, these conditions will be fulfilled for all overhang ledges of bump structures present on the front face. Furthermore, in certain embodiments, the combustor front panel will also comprise a through opening extending from the front face to a second, opposed face of the element. One or more through openings may be provided. However, in specific embodiments, the number of through openings is significantly smaller than the number of bump structures, for instance by a factor of 10 or more. Also, the cross-sectional dimension of a through opening may be significantly larger than that of a bump structure, for instance by a factor of 10 or more.

In one aspect of the present disclosure, a combustor front panel producible by a method described above is disclosed. Said combustor front panel comprises a first side, a second side, and a face extending form the first side to the second side, wherein bump structures are arranged on said face. The bump structures are delimited by delimitations, a delimitation comprising at least one reclining ledge and one overhang ledge when the combustor front panel is put down on a horizontal surface with one of the first and second sides. Each overhang ledge of a bump structure, and in particular each overhang ledge of each bump structure, is tilted against a horizontal line when the combustor front panel is put down on a horizontal surface with one of the first and second sides, wherein the tilt angle in particular is larger than or equal to 40 degrees. It is understood that, for the reasons lined out above, said tilt angle may differ from the tilt angle during the manufacturing process. In further embodiments of the combustor front panel, these conditions may be fulfilled for each overhang ledge of each bump structure.

In still another aspect of the present disclosure, an combustor front panel, producible by a method as described above is disclosed, the combustor front panel, comprising a first side, a second side, and a face extending form the first side to the second side. Bump structures are arranged on said face, a bump structure being delimited by a delimitation, the delimitation comprising at least one reclining ledge and one overhang ledge when the combustor front panel is put down on a horizontal surface with one of the first and second sides. Each overhang ledge abuts a second ledge, forming an apex with said second ledge, said apex pointing towards one of the first and second sides.

### BRIEF DESCRIPTION OF THE DRAWINGS

The present invention is now to be explained more closely by means of different embodiments and with reference to the attached drawings. The figures of the drawing show
- Fig. 1: general production of an overhang be a powder melting process;
- Fig. 2: a method according to the present disclosure;
- Fig. 3: a combustor front panel manufactured by a method according to the present disclosure after finalizing the additive manufacturing process;
- Fig. 4: the combustor front panel of figure 3 after final processing;
- Fig. 5: a concave bump structure;
- Fig. 6: a convex bump structure;
- Figs. 7-9: exemplary embodiments of concave bump structures in a plan view.

The embodiments shown in the figures are schematic. They are intended to facilitate understanding of the disclosure of the present document and are not intended to limit the scope of the claims attached hereto.

### DETAILED DESCRIPTION OF DIFFERENT EMBODIMENTS OF THE INVENTION

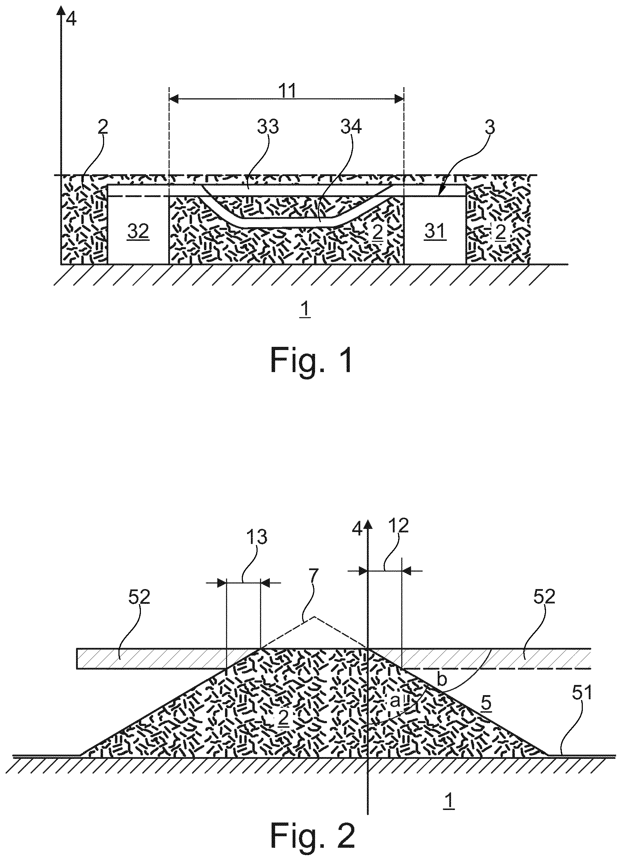

A problem underlying the invention is depicted in figure 1. In a selective laser melting process a metal powder 2 is disposed on a build platform 1. It is noted, that the bed of metal powder 2 shown in figure 1 is not disposed in one step, but disposed in consecutive layers. Between each disposal step the actual laser melting process takes place. A laser beam of appropriate power is directed onto the metal powder, and advanced on the surface of the metal powder, such that the metal powder is locally molten and subsequently re-solidified. By repeating the steps of disposing metal powder, melting, and re-solidifying, an element 3 is be built. The process of disposing one layer above another advances along the buildup direction 4 which may generally be bottom to top, or vertical. In the state depicted in figure 1 two fragments 31 and 32 of element 3 have been built. In an additional processing step a layer 33 bridging the two fragments is produced. Layer 33 bridges a distance 11 between the fragments 31 and 32 as a bridging layer. Initially, the bridging layer 33 is formed by only one layer of solidified metal. Typically, the thickness of this layer is from about 10 to about 100 micrometers. Thus, there is an imminent danger that the initially built bridging layer 33 will bend in response to its own weight and/or the weight of the subsequent layer of metal powder disposed thereon, as indicated at 34.

Thus, it is proposed to apply a method as schematically depicted in figure 2. Starting at the build platform 1, metal powder 2 is disposed on the build platform layer by layer. For each layer, the melting and re-solidifying step is carried out along a buildup direction 4. A component or combustor front panel 5 is thus manufactured starting from a base side 51. In order to manufacture an overhang structure, the overhang structure is manufactured such that it is tilted against the buildup direction 4 at an angle a. As previously mentioned, the buildup direction may typically be from bottom to top, thus, the overhang structure is tilted against a horizontal line, or, a top surface of the component 5, at an angle b. As is seen, in manufacturing an additional layer 52 on top of component 5 the resulting cantilevering distance depicted at 12 and 13 gets comparatively small. The cantilevering distance depends on the thickness of the top layer 52 and the angles a or b, respectively. The smaller angle a is chosen, or the bigger the angle b is chosen, the smaller the cantilevering distance of the top layer 52 gets. If said angles are chosen appropriately, the cantilevering distance 12 and 13 is small enough to bear its own weight and the weight of powder disposed on top of it in a subsequent recoating step. With a typical thickness of top layer 52 in a range from 10 to 100 micrometers, and angle a not exceeding 50 degrees, the cantilevering distance will in any case be less than 0.3 millimeters. As a result, a roof-type overhang structure as indicated by the dashed lines at 7 will be manufactured.

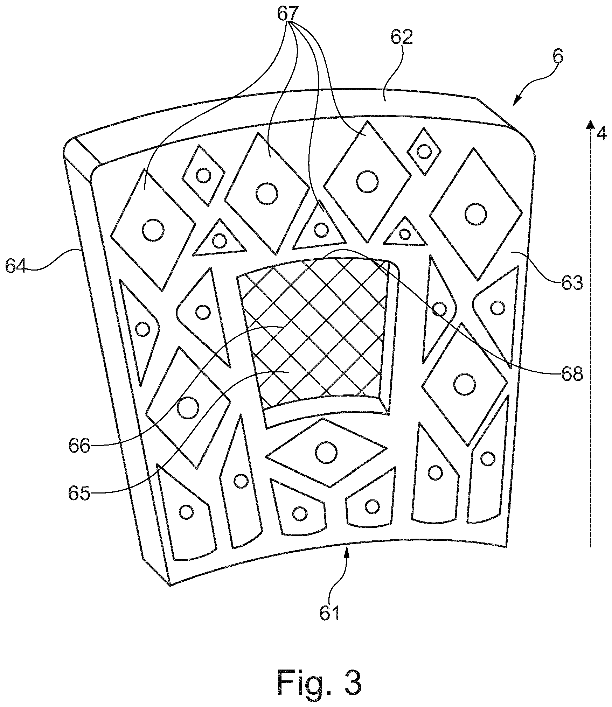

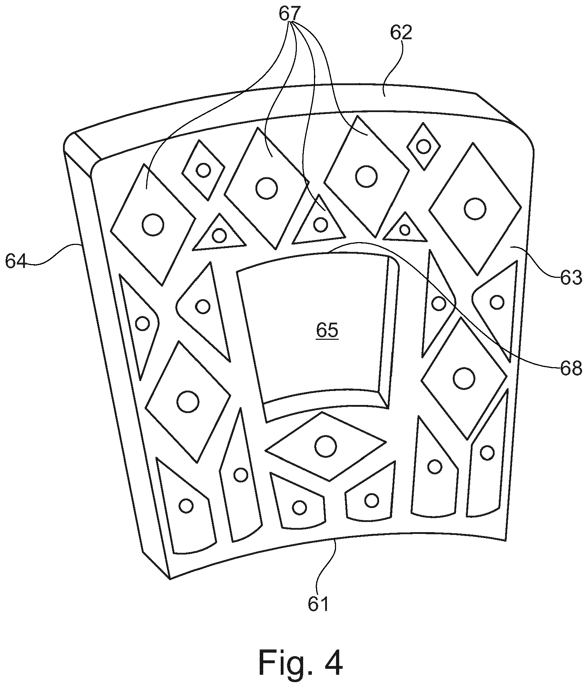

Figures 3 and 4 depict the application of a method as proposed herein to the manufacturing of a combustor front panel 6. The combustor front panel 6 comprises a first, base side 61, a second side 62, and a front face 63. A second face denoted at 64 is not visible in this view of the combustor front panel. A through opening 65 is provided in the combustor front panel in order to allow the throughflow of hot gas when the front panel is applied in a combustor. In figure 3, struts 66 serving as support structures are shown which have been manufactured by the additive manufacturing process within through opening 65. These support structures 66 serve to support an overhang top boundary 68 of through opening 65 while the manufacturing process is carried out. A buildup direction of the manufacturing process is indicated at 4. As shown in figure 4, after the additive manufacturing process has been finished, the struts 66 can be removed by a cutting process. This is relatively easy to perform, due to the size of the through opening, and the accessibility of the struts located within the through opening. Furthermore, the front face 63 is furnished with a multitude of bump structures 67.

These bump structures typically are depressions on the front face 63 serving as acoustic dampers. As these depressions are significantly smaller than through opening 65, and moreover delimited by back walls, i.e., the concave bump structures 67 are non-penetrating, access to any support structures which would have been manufactured within the concave bump structures would be much more difficult. Moreover, due to the larger number of concave bump structures, removing any support structures which would have been manufactured to support overhangs would be much more expensive. It is thus found desirable to manufacture the concave bump structures 67 without the need to manufacture support structures, and thus without subsequent cutting, i.e. it is found desirable to restrict the manufacturing of the bump structures to an additive process. Thus, the method which has been lined out in connection with figure 2 is applied in manufacturing the front panel shown in figures 3 and 4. The bump structures are generally polygon shaped; however, all bump structures comprise an apex at the top end or buildup side, and the upper boundaries provided as overhang ledges are tilted against the horizontal, i.e. include an angle with the buildup direction which is different from 90 degrees.

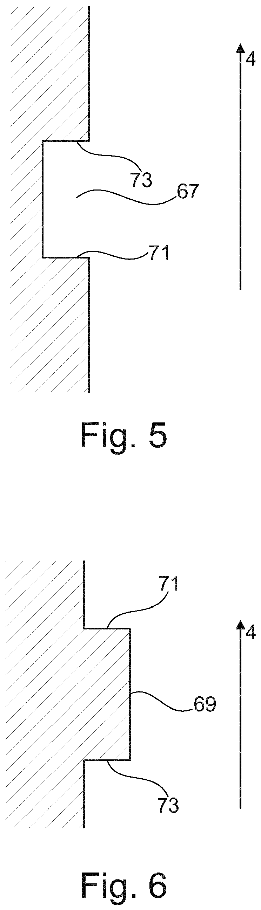

Figure 5 shows a sectional view through a concave bump structure 67. At the top side, or in the buildup direction 4, it is delimited by an overhang ledge 73. At the bottom, or towards the base side, it is delimited by a reclining ledge 71. A convex bump structure 69 shown in figure 6 is delimited on its top side by a reclining ledge 71, and at its bottom side by an overhang ledge 73. Generally, it can be said that an overhang ledge comprises a ledge surface pointing towards the base of a component, while the reclining ledge comprises a ledge surface pointing into the buildup direction.

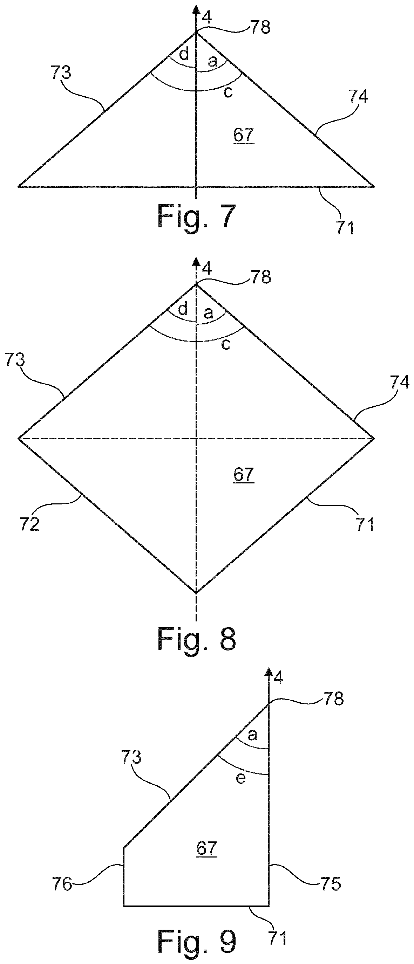

Exemplary configurations of concave bump members as may be producible by the method disclosed herein are shown in figures 7 through 9. Figure 7 depicts a first exemplary embodiment. The bump structure 67 is delimited by a delimitation comprising a reclining ledge 71 and two overhang ledges 73 and 74. Overhang ledges 73 and 74 include angles a and d with the buildup direction 4. They abut each other forming an apex 78, said apex being arranged at a buildup side of the bump structure and pointing into the buildup direction. They include an angle c with each other, which might for example be 100 degrees. It is apparent that overhang ledges 73 and 74 are well producible by the method disclosed herein and lined out in connection with figure 2.

Figure 8 depicts a further embodiment of a concave bump member 67. The bump member is diamond-shaped, with the delimitation comprising two reclining ledges 71 and 72, and two overhang ledges 73 and 74. Again, the overhang ledges abut each other forming an apex 78 arranged at a buildup end of the bump structure and pointing into the buildup direction 4

Finally, figure 9 depicts an embodiment wherein a concave bump member 67 is delimited by a reclining ledge 71, an overhang ledge 73, and two lateral ledges 75 and 76. Again, overhang ledge 73 is tilted and includes an angle a with the buildup direction 4. Overhang ledge 73 abuts a lateral ledge 75, forming an apex 78 arranged at the buildup end of the bump structure and pointing into the buildup direction 4, and including an angle e between the overhang ledge and the lateral ledge. In this embodiment, angle e is identical with angle a, which however is not mandatory.

It will become immediately clear to the skilled person how the embodiments shown in figures 7 through 9 are producible by a method as disclosed herein and lined out in connection with figure 2. It will also become readily apparent how the teaching given in connection with figures 7 through 9 will apply to convex structures, with the apex arranged at a base end and pointing towards the base, or the bottom, respectively.

### LIST OF REFERENCE NUMERALS

- 1: build platform
- 2: metal powder
- 3: element
- 4: buildup direction
- 5: component, element
- 6: combustor front panel
- 7: roof-type overhang structure
- 11: overhang distance
- 12: cantilevering distance
- 13: cantilevering distance
- 31: element fragment
- 32: element fragment
- 33: bridging layer
- 34: layer of metal powder
- 51: base side
- 52: additional layer
- 61: first side, base side
- 62: second side
- 63: front face
- 64: second face
- 65: through opening
- 66: struts, support structure
- 67: bump structure, concave bump structure
- 68: overhang top boundary
- 69: convex bump structure
- 71: reclining ledge
- 72: reclining ledge
- 73: overhang ledge
- 74: overhang ledge
- 75: lateral ledge
- 76: lateral ledge
- 78: apex

- a: angle
- b: angle
- c: angle
- d: angle
- e: angle

## Claims

1. A method for manufacturing a combustor front panel by an additive manufacturing process, the additive manufacturing process comprising consecutively adding material to the combustion front panel along a buildup direction (4) starting from a base side (51) in producing the base side transverse to the buildup direction by the additive manufacturing process and adding material starting at the base side in consecutive steps, the method comprising manufacturing the element such as to comprise a front face (63) extending from the base side and into the buildup direction, the method further comprising manufacturing at least one bump structure (67, 69) on said front face (63) by means of the additive manufacturing process, wherein a delimitation of said bump structure comprises at least one reclining ledge (71, 72) and at least one overhang ledge (73, 74), the method further comprising manufacturing all overhang ledges (73, 74) to form an angle (a, d) with the buildup direction (4) being smaller than or equal to 50 degrees, **characterized in that** it comprises manufacturing at least one acoustic damper defined by a concave bump structure (67) as a depression on the front face (63) that does not penetrate the combustor front panel from the front face (63) to an opposite second face (64) and manufacturing a back wall delimiting the concave bump structure.

2. The method according to claim 1, **characterized in** comprising manufacturing at least one bump structure (67, 69) such that a delimitation of said bump structure comprises two adjacent overhang ledges (74, 75), said overhang ledges including an angle (c) and forming an apex (78), said apex being arranged at a buildup end of a concave bump structure (67) or on a base end of a convex bump structure(69).

3. The method according to any of the preceding claims, **characterized in** comprising manufacturing at least one bump structure (67, 69) such that a delimitation of said bump structure comprises an overhang ledge (73) and a lateral ledge (75), said overhang ledge and said lateral ledge including an angle (e) and forming an apex (78), said apex being arranged at a buildup end of a concave bump structure (67) or on a base end of a convex bump structure (69), said angle being smaller 50 degrees.

4. The method according to any of the preceding claims, **characterized in** comprising manufacturing at least one through opening (65) extending from the first front face (63) to a second front face (64) by the additive manufacturing process.

5. The method according to claim 4, **characterized in** comprising manufacturing a support structure (66) in at least one through opening (65) and in particular in removing the supporting structure after the additive manufacturing process has finished by a removing manufacturing process.

6. The method according to any of the preceding claims, wherein the buildup direction (4) is bottom to top.

7. The method according to any of the preceding claims, **characterized in that** manufacturing the bump structures is restricted to an additive manufacturing process.

8. The method according to any of the preceding claims, **characterized in that** the additive manufacturing process is one of a selective laser melting process and a selective electron beam melting process.

9. A combustor front panel producible by a method according to any of the preceding claims, the combustor front panel comprising a first side (51, 61), a second side (62), and a front face (63) extending form the first side to the second side, and wherein bump structures (67, 69) are arranged on said front face, the bump structures being delimited by a delimitation, the delimitation comprising at least one reclining ledge (71, 72) and one overhang ledge (73, 74) when the element is put down on a horizontal surface with one of the first and second sides each overhang ledge of each bump structure being tilted against a horizontal line when the element is put down on a horizontal surface with one of the first and second sides, wherein the tilt angle is larger than or equal to 40 degrees, **characterized by** at least one acoustic damper defined by a concave bump structure (67) in the form of a depression on the front face (63) that does not penetrate the combustor front panel from the front face (63) to an opposite second face (64) and is delimited by a back wall.

## Patentansprüche

1. Verfahren zur Herstellung einer Brennkammerfrontplatte durch ein additives Herstellungsverfahren, wobei das additive Herstellungsverfahren das aufeinanderfolgende Hinzufügen von Material zu der Verbrennungsfrontplatte entlang einer Aufbaurichtung (4) ausgehend von einer Basisseite (51) umfasst,
wobei die Basisseite quer zur Aufbaurichtung durch das additive Herstellungsverfahren hergestellt wird und wobei Material ausgehend von der Basisseite in aufeinanderfolgenden Schritten zugegeben wird, wobei das Verfahren das Herstellen des Elements derart umfasst, dass es eine sich von der Basisseite in die Aufbaurichtung erstreckende Vorderseite (63) umfasst,
wobei das Verfahren ferner das Herstellen mindestens einer Höckerstruktur (67, 69) auf der Vorderseite (63) mittels des additiven Herstellungsverfahrens umfasst, wobei eine Abgrenzung der Höckerstruktur mindestens eine Verstellleiste (71, 72) und mindestens eine Überhangleiste (73, 74) umfasst,
wobei das Verfahren ferner das Herstellen aller Überhangleisten (73, 74) umfasst, um einen Winkel (a, d) mit der Aufbaurichtung (4) zu bilden, der kleiner oder gleich 50 Grad ist,
**dadurch gekennzeichnet, dass** es Folgendes umfasst:
Herstellen mindestens eines Schalldämpfers, der durch eine konkave Höckerstruktur (67) als Vertiefung auf der Vorderseite (63) definiert ist, welche die Brennkammerfrontplatte nicht von der Vorderseite (63) zu einer gegenüberliegenden zweiten Seite (64) durchdringt, und Herstellen einer Rückwand, welche die konkave Höckerstruktur begrenzt.

2. Verfahren nach Anspruch 1, **dadurch gekennzeichnet, dass** es das Herstellen mindestens einer Höckerstruktur (67, 69) derart umfasst, dass eine Begrenzung der Höckerstruktur zwei benachbarte Überhangleisten (74, 75) umfasst, wobei die Überhangleisten einen Winkel (c) aufweisen, und eine Spitze (78) ausbilden, wobei die Spitze an einem Aufbauende einer konkaven Höckerstruktur (67) oder an einem Basisende einer konvexen Höckerstruktur (69) angeordnet ist.

3. Verfahren nach einem der vorhergehenden Ansprüche, **dadurch gekennzeichnet, dass** es das Herstellen mindestens einer Höckerstruktur (67, 69) derart umfasst, dass eine Begrenzung der Höckerstruktur eine Überhangleiste (73) und eine seitliche Leiste (75) umfasst, wobei die Überhangleiste und die seitliche Leiste einen Winkel (e) aufweisen und eine Spitze (78) ausbilden, wobei die Spitze an einem Aufbauende einer konkaven Höckerstruktur (67) oder an einem Basisende einer konvexen Höckerstruktur (69) angeordnet ist, wobei der Winkel kleiner als 50 Grad ist.

4. Verfahren nach einem der vorhergehenden Ansprüche, **dadurch gekennzeichnet, dass** es das Herstellen mindestens einer Durchgangsöffnung (65) umfasst, die sich durch das additive Herstellungsverfahren von der ersten Vorderseite (63) bis zu einer zweiten Vorderseite (64) erstreckt.

5. Verfahren nach Anspruch 4, **dadurch gekennzeichnet, dass** es das Herstellen einer Tragstruktur (66) in mindestens einer Durchgangsöffnung (65) umfasst, und insbesondere dadurch, dass die Tragstruktur durch ein Entfernungsfertigungsverfahren entfernt wird, nachdem das additive Herstellungsverfahren abgeschlossen ist.

6. Verfahren nach einem der vorhergehenden Ansprüche, wobei die Aufbaurichtung (4) von unten nach oben verläuft.

7. Verfahren nach einem der vorhergehenden Ansprüche, **dadurch gekennzeichnet, dass** die Herstellung der Höckerstrukturen auf ein additives Herstellungsverfahren beschränkt ist.

8. Verfahren nach einem der vorhergehenden Ansprüche, **dadurch gekennzeichnet, dass** das additive Herstellungsverfahren eines von einem selektiven Laserschmelzverfahren und einem selektiven Elektronenstrahlschmelzverfahren ist.

9. Brennkammerfrontplatte, die durch ein Verfahren nach einem der vorhergehenden Ansprüche herstellbar ist, wobei die Brennkammerfrontplatte eine erste Seite (51, 61), eine zweite Seite (62) und eine Vorderseite (63), die sich von der ersten Seite bis zur zweiten Seite erstreckt, umfasst, und wobei Höckerstrukturen (67, 69) auf der Vorderseite angeordnet sind,
wobei die Höckerstrukturen durch eine Begrenzung begrenzt sind, wobei die Begrenzung mindestens eine Verstellleiste (71, 72) und eine Überhangleiste (73, 74) umfasst, wenn das Element auf einer horizontalen Oberfläche abgelegt wird,
wobei eine der ersten und der zweiten Seite jeder Überhangleiste jeder Höckerstruktur gegen eine horizontale Linie geneigt wird, wenn das Element auf einer horizontalen Oberfläche mit einer der ersten und der zweiten Seite abgelegt wird,
wobei der Neigungswinkel größer oder gleich 40 Grad ist,
**dadurch gekennzeichnet, dass** es mindestens einen Schalldämpfer aufweist, der durch eine konkave Höckerstruktur (67) in Form einer Vertiefung auf der Vorderseite (63) definiert ist, welche die Brennkammerfrontplatte nicht von der Vorderseite (63) zu einer gegenüberliegenden zweiten Seite (64) durchdringt und von einer Rückwand begrenzt ist.

## Revendications

1. Procédé pour fabriquer un panneau avant de chambre de combustion par un processus de fabrication additive, le processus de fabrication additive comprenant l'ajout consécutivement de matériau au panneau avant de chambre de combustion le long d'une direction de construction (4) en commençant par un côté de base (51) pour la production du côté de base transversalement à la direction de construction par le processus de fabrication additive et l'ajout de matériau en commençant du côté de base par étapes consécutives, le procédé comprenant la fabrication de l'élément de sorte qu'il comprenne une face avant (63) s'étendant à partir du côté de base et dans la direction de construction, le procédé comprenant en outre la fabrication d'au moins une structure de bossage (67, 69) sur ladite face avant (63) au moyen du processus de fabrication additive, dans lequel une délimitation de ladite structure de bossage comprend au moins un rebord inclinable (71, 72) et au moins un rebord en surplomb (73, 74), le procédé comprenant en outre la fabrication de tous les rebords en surplomb (73, 74) pour former un angle (a, d) avec la direction de construction (4) qui est inférieur ou égal à 50 degrés, **caractérisé en ce qu'**il comprend la fabrication d'au moins un atténuateur acoustique défini par une structure de bossage concave (67) en tant que dépression sur la face avant (63) qui ne pénètre pas dans le panneau avant de chambre de combustion de la face avant (63) vers une deuxième face (64) opposée et la fabrication d'une paroi arrière délimitant la structure de bossage concave.

2. Procédé selon la revendication 1, **caractérisé en ce qu'**il comprend la fabrication d'au moins une structure de bossage (67, 69) de sorte qu'une délimitation de ladite structure de bossage comprenne deux rebords en surplomb (74, 75) adjacents, lesdits rebords en surplomb formant un angle (c) et formant un sommet (78), ledit sommet étant agencé à une extrémité de construction d'une structure de bossage concave (67) ou sur une extrémité de base d'une structure de bossage convexe (69).

3. Procédé selon l'une quelconque des revendications précédentes, **caractérisé en ce qu'**il comprend la fabrication d'au moins une structure de bossage (67, 69) de sorte qu'une délimitation de ladite structure de bossage comprenne un rebord en surplomb (73) et un rebord latéral (75), ledit rebord en surplomb et ledit rebord latéral formant un angle (e) et formant un sommet (78), ledit sommet étant agencé à une extrémité de construction d'une structure de bossage concave (67) ou sur une extrémité de base d'une structure de bossage convexe (69), ledit angle étant inférieur à 50 degrés.

4. Procédé selon l'une quelconque des revendications précédentes, **caractérisé en ce qu'**il comprend la fabrication d'au moins une ouverture traversante (65) s'étendant de la première face avant (63) jusqu'à une deuxième face avant (64) par le processus de fabrication additive.

5. Procédé selon la revendication 4, **caractérisé en ce qu'**il comprend la fabrication d'une structure de support (66) dans au moins une ouverture traversante (65) et en particulier par le retrait de la structure de support à la fin du processus de fabrication additive par un processus de fabrication par retrait.

6. Procédé selon l'une quelconque des revendications précédentes, dans lequel la direction de construction (4) est du bas vers le haut.

7. Procédé selon l'une quelconque des revendications précédentes, **caractérisé en ce que** la fabrication des structures de bossage est limitée à un processus de fabrication additive.

8. Procédé selon l'une quelconque des revendications précédentes, **caractérisé en ce que** le processus de fabrication additive est l'un d'un processus de fusion par laser sélectif et d'un processus de fusion par faisceau électronique sélectif.

9. Panneau avant de chambre de combustion pouvant être produit par un procédé selon l'une quelconque des revendications précédentes, le panneau avant de chambre de combustion comprenant un premier côté (51, 61), un deuxième côté (62), et une face avant (63) s'étendant du premier côté jusqu'au deuxième côté, et dans lequel des structures de bossage (67, 69) sont agencées sur ladite face avant, les structures de bossage étant délimitées par une délimitation, la délimitation comprenant au moins un rebord inclinable (71, 72) et un rebord en surplomb (73, 74) lorsque l'élément est posé sur une surface horizontale avec l'un des premier et deuxième côtés, chaque rebord en surplomb de chaque structure de bossage étant incliné par rapport à une ligne horizontale lorsque l'élément est posé sur une surface horizontale avec l'un des premier et deuxième côtés, dans lequel l'angle d'inclinaison est supérieur ou égal à 40 degrés, **caractérisé par** au moins un atténuateur acoustique défini par une structure de bossage concave (67) sous la forme d'une dépression sur la face avant (63) qui ne pénètre pas dans le panneau avant de chambre de combustion de la face avant (63) jusqu'à une deuxième face (64) opposée et qui est délimitée par une paroi arrière.
